Europäisches Patentamt

European Patent Office

Office européen des brevets

(11) Veröffentlichungsnummer : **0 065 755 B1**

# EUROPÄISCHE PATENTSCHRIFT

(45) Veröffentlichungstag der Patentschrift :
18.09.85

(51) Int. Cl.⁴ : **F 16 B 13/14**

(21) Anmeldenummer : **82104394.0**

(22) Anmeldetag : **19.05.82**

(54) **Einkomponentenkleber für Klebepatronen und Dübelmassen.**

(30) Priorität : **27.05.81 DE 3121112**

(43) Veröffentlichungstag der Anmeldung :
**01.12.82 Patentblatt 82/48**

(45) Bekanntmachung des Hinweises auf die Patenterteilung : **18.09.85 Patentblatt 85/38**

(84) Benannte Vertragsstaaten :
**AT BE CH DE FR GB IT LI LU NL SE**

(56) Entgegenhaltungen :
**DD-A-   102 375
DE-A- 1 952 712
DE-A- 2 256 388
DE-A- 2 728 742
GB-A-   953 056**

(73) Patentinhaber : **Kremo Werke Hermanns GmbH & Co.
Kommanditgesellschaft
Blumentalstrasse 141-145
D-4150 Krefeld (DE)**

(72) Erfinder : **Bovender, Franz
Schönwasserstrasse 26
D-4150 Krefeld (DE)**
Erfinder : **Hermanns, Heinz-Werner
Gustav-Fünders-Weg 6
D-4150 Krefeld (DE)**

(74) Vertreter : **Stark, Walter, Dr.-Ing.
Moerser Strasse 140
D-4150 Krefeld (DE)**

Jouve, 18, rue St-Denis, 75001 Paris, France

**Beschreibung**

Die Erfindung betrifft die Verwendung eines mehrfachfunktionelle Isocyanate, hydraulische oder wasserhärtende Bindemittel und Füllstoffe enthaltenden Gemisches als Einkomponentenkleber für Klebepatronen und Dübelmassen.

Für die Befestigung von z. B. Ankerstangen in Gesteinsbohrlöchern verwendet man herkömmlich Klebepatronen mit zumindest zwei Kammern, in denen die beiden Komponenten eines Zweikomponentenklebers untergebracht sind. Bei der einen Komponente kann es sich um ungesättigte Polyesterharze mit beigemengten Füllstoffen handeln, wobei ggf. auch noch Vorbeschleuniger enthalten sein könnte, während die andere Komponente z. B. Benzoylperoxid ist.

Derartige Klebepatronen mit zumindest zwei Kammern (DE-AS 22 22 013), sind in der Herstellung verhältnismäßig kostenintensiv, weil sie aus vergleichsverweise wertvollen Rohstoffen hergestellt werden, die nicht nur eine hinreichende mechanische Festigkeit besitzen sondern auch chemisch resistent gegen die darin gelagerten Stoffe sind.

Zum Befestigen einer Ankerstange in einem Gesteinsbohrloch wird die Klebepatrone in das Tiefste des Bohrloches eingesetzt und dann mit Hilfe der anschließend eingesetzten Ankerstange zerstört. Dabei werden die beiden Komponenten miteinander vermischt, so daß die Klebemasse aushärten kann.

Nachteilig dabei ist, daß Zweikomponentenkleber auf der Basis von Kunstharzen während und nach der chemischen Vernetzung schrumpfen. Dieser Schrumpf kann auch durch die vorwiegend anorganischen Füllstoffe nur teilweise aufgefangen werden. Durch diesen Schrumpf kann bei entsprechender Disposition des das Bohrloch umgebenden Gesteins die Möglichkeit nicht ausgeschlossen werden, daß die theoretisch erzielbaren Verbundfestigkeiten nicht erreicht werden.

Nachteilig ist weiterhin, daß in vielen Fällen am und im Bohrloch Feuchtigkeit vorhanden ist, die sich nachteilig auf den Aushärtungsvorgang auswirkt und ggf. sogar eine Verseifung der Harze herbeiführen kann. Auch das führt zu einer Verringerung der Verbundfestigkeit.

Da bei handelsüblichen Klebeankern der Verfestigungseffekt ausschließlich das Resultat der chemischen Umsetzung organischer Strukturen ist behält auch die ausgehärtete Klebemasse immer das daraus resultierende Brandverhalten, d. h. sie bildet im Brandfall einen bestimmten Heizwert. Rein organisch gebundene Werkstoffe versagen aber aufgrund der mit anorganisch gebundenen Stoffen durchweg nicht vergleichbaren Temperaturbeständigkeit bereits bei geringen Brandbelastungen.

Nachteilig ist auch, daß Zweikomponentenkleber nicht kontinuierlich mit Kartuschen verarbeitet werden können, wie z. B. pastöse Einkomponentendichtstoffe, da vom Zeitpunkt der Vermischung der beiden Komponenten eine Verfestigung einsetzt.

Es sind aber auch Einkomponentenmassen bekannt (DE-OS 28 10 503), die gemeinsam mit Spreizdübeln verarbeitet werden und die ggf. auch als aushärtbare Füllmassen verwendet werden. Diese Einkomponentenmassen härten unter der Einwirkung von Luft und/oder Feuchtigkeit aus. Nachteilig dabei ist die relativ aufwendige Verarbeitung, weil diese Einkomponentenmassen nach dem Setzen der Spreizdübel in flüssiger Form in das Bohrloch eingepreßt werden müssen und daß die Verbundfestigkeit kein Resultat der Härtung der Füllmassen ist.

Für Bodenbeläge hat man bereits die Verwendung von Polyisocyanaten in Verbindung mit hydraulischen Bindemitteln vorgeschlagen (DD-PS 102 375) wodurch eine rasche Härtung des Belages erreicht wird.

Aufgabe der Erfindung ist, einen Einkomponentenkleber anzugeben, der nicht nur den technischen Anforderungen nach hoher Endfestigkeit, einfachem Aufbau, guter Lagerstabilität, entspricht, sondern auch beim Aushärten ein schrumpffreies bzw. mässiges expandierendes Verhalten zeigt, der auch über längere Zeiträume mit allen üblichen Materialien (Gesteinen u. dgl.) verträglich ist und der auch im Brandfall ein günstiges Verhalten zeigt. Angestrebt wird ferner ein Einkomponentenkleber, der wirtschaftlich herstellbar und sich einfach verarbeiten läßt.

Diese Aufgabe wird durch die eingangs beschriebene Verwendung eines mehrfach funktionelle Isocyanate hydraulische oder wasserhärtende Bindemittel und Füllstoffe enthaltenden Gemisches als Einkomponentenkleber für Klebepatronen und Dübelmassen gelöst. Nach bevorzugter Ausführungsform der Erfindung kann das Gemisch 88 Gewichtsteile eines in Wasser emulgierbaren Isocyanathärters, 107 Gewichtsteile Portland-Zement und 112,5 Gewichtsanteile Quarzsplitt der Körnung 1 bis 2 mm enthalten.

Überraschenderweise hat sich gezeigt, daß ein derartiger Einkomponentenkleber, der handelsübliche emulgierbare mehrfunktionelle Isocyanatharze und/oder Härter enthält, wie sie beispielsweise auch in der Spanplattenindustrie als Bindemittel Verwendung finden, in einem Gemisch mit trockenen, hydraulischen Bindemitteln und/oder trockenen Zuschlagstoffen flüssig bleibt und unter dampfdichtem Verschluß in diesem Zustand lagerstabil ist. Dementsprechend besteht die Möglichkeit, ein derartiges Gemisch in einfachsten Klebepatronen über längere Zeiten zu lagern, ohne daß eine chemische Reaktion eintritt.

Eine solche chemische Reaktion tritt erst dann ein, wenn die Klebepatrone in ein Bohrloch eingesetzt und mit Hilfe der Ankerstange zerstört ist. Dann setzt die bekannte Umlagerung zu z.B. Polyharnstoff ein, wobei das am oder im Bohrloch verfügbare Wasser bzw. die dort verfügbare Feuchtigkeit die Reaktionen einleitet.

**0 065 755**

Der Reaktionsverlauf ist unabhängig von der Lagerungszeit bzw. dem Alter des dampfdicht in der Klebepatrone eingeschlossenen Gemisches. Die Reaktionsgeschwindigkeit kann durch Anwesenheit auch kleinster Mengen an sich bekannter Katalysatoren wie z. B. Tertiären Aminen und/oder Metallorganischen Verbindungen, wie z. B. Sn-II-Salzen, gesteuert werden.

Die Menge des verfügbaren Wassers hat nur wenig Einfluß auf den Härtungsverlauf und die Endfestigkeit der Klebemasse. Das reaktionsbedingt anfallende Kohlendioxid kompensiert einerseits den Schrumpf und wird andererseits von den anorganischen Bindemitteln, wie Portland-Zement, als Reaktionspartner zu deren eigener Verfestigung aufgenommen.

Das Gemisch kann dampfdicht z. B. in Glasampullen oder einfachen Kunststoffpatronen abgefüllt werden. Zum Befestigen einer Ankerstange in einem Bohrloch od. dgl. kann man so vorgehen, daß zunächst das Bohrloch oder die Ankerstange mit Wasser befeuchtet werden und dann die Ankerstange zur Zerstörung der Klebepatrone in das Bohrloch getrieben wird. Die dabei auftretenden Scherkräfte und Bewegungen reichen aus, den anfänglich nofwendigen Homogenisierungsgrad einzustellen, um die Reaktion zwischen Wasser und Isocyanat einerseits und eine mögliche Reaktion von Kohlendioxid mit den anorganischen Bindemitteln andererseits und schließlich eine langsam verlaufende Reaktion von Wasser mit den anorganischen Bindemitteln einzuleiten.

Wie oben beschrieben, wirkt das freiwerdende Kohlendioxid als porenbildendes Treibmittel, wodurch im Ergebnis nicht nur kein Schrumpf auftritt sondern auch eine geringe Ausdehnung der Klebemasse eintritt, die dazu beiträgt, die Befestigung der Ankerstange im Bohrloch zu verbessern.

Die Verbundfestigkeit ist in einem weiten Bereich unempfindlich gegenüber der Dosierung von Wasser bzw. Feuchtigkeit, da stöchiometrische Mindermengen aus der Luft- bzw. Baufeuchte aufgefüllt werden und Feuchtigkeitsüberschüsse, die noch nicht vom hydraulischen Bindemittel umlagert werden, ausdiffundieren können. Die relativ hohen Diffusionsgeschwindigkeiten, die erfahrungsgemäß in derartigen Systemen auftreten, sorgen auch für den Ausgleich von Feuchte- Konzentrationsgefällen im Laufe der Zeit.

Zur Verbesserung des Verhaltens im Brandfall trägt die längerfristig verlaufende Hydratation des beteiligten anorganischen Binders zu einem thermisch wesentlich stabileren Material, z. B. Zementstein, bei.

Zur Steuerung der Reaktionsgeschwindigkeiten können übliche Katalysatoren in geringer Dosierung eingesetzt werden.

Damit wenigstens zu Beginn der Aushärtung eine gewisse Wassermenge zur Verfügung steht, kann die Ankerstange wenigstens auf den in das Bohrloch einzutreibenden Abschnitt mit hydrophilen Stoffen behandelt und dann mit Wasser befeuchtet werden. Ein derartiges feuchtebindendes oder hydrophiles Finish kann vermehrt Feuchte aufnehmen, wenn die entsprechend Kontaktbereiche ggf. erst kurz vor dem Setzen der Ankerstange mit Wasser benetzt werden. Damit wird die Ankerstange selbst zum Träger von Feuchte und/oder Katalysatoren, nämlich dann, wenn dem Wasser zur Befeuchtung des Bohrloches oder der Ankerstange Reaktionskatalysatoren beigegeben werden.

Im folgenden werden Ausführungsbeispiele der Erfindung erläutert ;

### Beispiel 1

Von einer Dübelmasse aus 88,0 Gew. Tl. (Gewichtsteile) handelsüblichem, wasseremulgierbarem Isocyanathärter, 112,5 Gew.Tl. Quarzsplitt 1-2 mm (24 h bei 115 °C getrocknet) und 107,0 Gew. Tl. frischem Portlandzement PZ 35 werden ca. 6 ml in eine Glasampulle mit dem Außenmaßen Durehmesser ca. : 16 mm, Höhe ca. : 55 mm gegeben und wasserdampfdicht eingeschlossen.

Nach 30 Tagen Lagerung bei RT (Raumtemperatur) war die hochviskose Konsistenz der Dübelmasse kaum verändert.

Nach 40 Tagen wurde die Glasampulle mit dem Verschluß nach vorn in eine vorher ausgeblasene und mit Stadtwasser angefeuchtete Bohrung 18 × 82 mm an einem Betonstein 0,5 × 0,5 × 1,3 mm Qualität B 450, Alter 12 Monate, gesetzt und mittels einer leicht angespitzten, ebenfalls mit Stadtwasser angefauchteten Gewindestange M 16 durch Einschlagen zerstört. Weiteres Eindrehen fixiert die Stange. Vor Ablauf von 4 h bei 15,6 °C ist Belastbarkeit erreicht.

### Beispiel 2

Eine Dübelmasse gemäß Beispiel 1 wird aus einer handelsüblichen Kolben-Kartusche in eine ausgeblasene Bohrung 17 × 100 mm an einem Betonstein 0,5 × 0,5 × 1,3 m Qualität B 450, Alter 16 Tage, eingetragen. Anschließend wird eine unbehandelte Gewindestange M 16 durch Eindrehen fixiert. Vor Ablauf von 4 h bei 18,5 °C ist die Belastbarkeit bis zum Betonausbruch erreicht.

### Beispiel 3

Arbeitsweise gemäß Beispiel 1 jedoch ohne Anfeuchten des Bohrloches. Die M 16 Gewindestange wurde entfettet und ca. 100 mm tief in eine Lösung aus 2,2 Gew. Tl. handelsüblicher Methylcellulose

3

0,001   Gew. Tl. handelsüblicher Netzmittelösung
3,5      Gew. Tl. Tiäthylendiamin
in 100     Gew. Tl. Wasser
getaucht, anschließend 6 h bei 45 °C getrocknet.

Nach 24 h wird der getauchte Bereich 3 s in Stadtwasser gehalten und nach ca. 1 min in die Klebepatrone getriebene. Vor Ablauf von 30 min bei 20,2 °C ist Belastbarkeit erreicht.

### Beispiel 4

Arbeitsweise gemäß Beispiel 1 jedoch wird die ausgeblasene Bohrung mit einer frischen Mischung aus 100 Gew. Tl. Wasser und 0,6 Gew. Tl. Triäthylendiamin und ca. 0,01 Gew. Tl. handelsüblicher Netzmittellösung angefeuchtet.

Vor Ablauf von 1 h bei 20,3 °C ist Belastbarkeit erreicht.

### Beispiel 5

Eine Dübelmasse gemäß Beispiel 1 wird mittels einer Kolbenkartusche in einen geeigneten, angefeuchteten Injektionsanker (20 × 20 × 185 mm), der in ein angefeuchtetes Bohrloch 35 × 11,5 mm (Beton B 450, Alter 12 Monate) gesetzt ist, solange eingepreßt, bis überschüssiges Material am Überlaufloch sichtbar wird.

Vor Ablauf von 3 h bei 20,3 °C ist Belastbarkeit erreicht.

## Patentansprüche

1. Verwendung eines mehrfach funktionelle Isocyanate, hyraulische oder wasserhärtende Bindemittel und Füllstoffe enthaltenden Gemisches als Einkomponentenkleber für Klebepatronen und Dübelmassen.

2. Verwendung nach Anspruch 1, dadurch gekennzeichnet, daß das Gemisch 88 Gewichtsteile eines in Wasser emulgierbaren Isocyanathärters, 107 Gewichtsteile Portland-Zement und 112,5 Gewichtsteile Quarzsplitt der Körnung 1 bis 2 mm enthält.

3. Verfahren zum Befestigen einer Ankerstange od. dgl. in einem Bohrloch, wobei eine den Einkomponentenkleber nach Anspruch 1 oder 2 enthaltende Klebepatrone in das Bohrloch eingesetzt und mit der Ankerstange zerstört wird, dadurch gekennzeichnet, daß das Bohrloch oder die Ankerstange mit Wasser befeuchtet werden und dann die Ankerstange zur Zerstörung der Klebepatrone in das Bohrloch getrieben wird.

4. Verfahren nach Anspruch 3, dadurch gekennzeichnet, daß die Oberfläche der Ankerstange wenigstens auf dem in das Bohrloch einzutreibenden Abschnitt mit hydrophilen Stoffen behandelt und dann mit Wasser befeuchtet wird.

5. Verfahren nach Anspruch 3 oder 4, dadurch gekennzeichnet, daß dem Wasser zur Befeuchtung des Bohrloches oder der Ankerstange Reaktionskatalysatoren beigegeben werden.

6. Verfahren nach Anspruch 3 oder 4, dadurch gekennzeichnet, daß die Oberflächen der Anker od. dgl. Reaktionskatalysatoren tragen.

## Claims

1. The use of a mixture containing multi-functional isocyanates, hydraulic or water-hardening binders and fillers as a one-component adhesive for adhesive cartridges and for plugging materials.

2. The use according to Claim 1, characterized in that the mixture contains 88 parts by weight of an isocyanate hardener which is emulsifiable in water, 107 parts by weight of Portland cement and 112.5 parts by weight of quartz chippings of a grain size of between 1 and 2 mm.

3. A method of securing a tie rod or the like in a bore hole, in which an adhesive cartridge containing the one-component adhesive according to Claim 1 or 2 is introduced into the borehole and is broken by the tie rod, characterized in that the borehole or the tie rod is moistened with water and then the tie rod is driven into the borehole in order to break the adhesive cartridge.

4. A method according to Claim 3, characterized in that the surface of the tie rod is treated with hydrophilic substances at least on the portion to be driven into the borehole and is then moistened with water.

5. A method according to Claim 3 or 4, characterized in that reaction catalysts are added to the water for moistening the borehole or the tie rod.

6. A method according to Claim 3 or 4, characterized in that the surfaces of the ties or the like are provided with reaction catalysts.

## Revendications

1. Utilisation d'un mélange contenant des isocyanates polyfonctionnels, des liants hydrauliques ou durcissables par l'eau et des charges, comme colle à un composant pour cartouches à coller et pour matières de cheville.

2. Utilisation selon la revendication 1, caractérisée en ce que le mélange contient 88 parties en poids d'un durcisseur d'isocyanates émulsifiable dans l'eau, 107 parties en poids de ciment portland et 112,5 parties en poids de gravillon de quartz d'une granulométrie de 1 à 2 mm.

3. Procédé pour la fixation d'une tige d'ancrage ou d'un élément similaire dans un trou, dans lequel on insère dans le trou une cartouche à coller contenant la colle à un seul composant selon l'une des revendications 1 et 2 et on la détruit avec la tige d'ancrage, caractérisé en ce que l'on mouille le trou ou la tige d'ancrage avec de l'eau et qu'alors on enfonce la tige d'ancrage dans le trou pour détruire la cartouche à coller.

4. Procédé selon la revendication 3, caractérisé en ce que l'on traite par des substances hydrophiles la surface de la tige d'ancrage, au moins sur le tronçon à enfoncer dans le trou et qu'alors, on la mouille avec de l'eau.

5. Procédé selon l'une des revendications 3 et 4, caractérisé en ce que l'on ajoute des catalyseurs de réaction à l'eau servant à mouiller le trou ou la tige d'ancrage.

6. Procédé selon l'une des revendications 3 et 4, caractérisé en ce que les surfaces des ancrages ou éléments similaires portent des catalyseurs de réaction.